# FASCICULE DE BREVET EUROPEEN

(11) **EP 1 791 454 B1**
(45) Date de publication et mention de la délivrance du brevet: **10.12.2008**
(21) Numéro de dépôt: 05800592.7
(22) Date de dépôt: 01.09.2005
(51) Int. Cl.: A47J 31/44

(54) **DISPOSITIF DE PRODUCTION D 'EMULSION DE LAIT ET MACHINE A CAFE COMPRENANT UN TEL DISPOSITIF**
VORRICHTUNG ZUR HERSTELLUNG EINER MILCHEMULSION UND KAFFEEMASCHINE MIT SOLCH EINER VORRICHTUNG
DEVICE FOR PRODUCING A MILK EMULSION AND COFFEE MACHINE COMPRISING ONE SUCH DEVICE

(30) Priorité: 10.09.2004 FR 0409625
(43) Date de publication de la demande: 06.06.2007
(73) Titulaire: SEB S.A., 69130 Ecully (FR)
(72) Inventeur: TURPIN, Romain, F-14000 CAEN (FR); BAZIN, Nicolas, F-14200 HEROUVILLE SAINT CLAIR (FR)
(74) Mandataire: Kiehl, Hubert
(86) Numéro de dépôt international: PCT/FR2005/002192
(87) Numéro de publication internationale: WO 2006/030093

(56) Documents cités:
- EP-A- 0 243 326
- WO-A-03/043472
- DE-C1- 3 902 281

## Description

La présente invention se rapporte à un dispositif de production d'émulsion de lait comprenant un corps comportant :
- un conduit d'injection de vapeur débouchant dans une chambre d'aspiration et destiné à être connecté à une source de vapeur ;
- un conduit de lait en communication avec la chambre d'aspiration et destiné à être relié à un récipient contenant du lait ;
- un conduit d'air en communication avec ladite chambre d'aspiration et présentant un débouché par lequel est destiné à être aspiré de l'air ambiant ;
- une chambre d'émulsion présentant une sortie par laquelle l'émulsion formée est évacuée ; et
- un organe de commande d'air adapté à régler le débit d'air circulant dans le conduit d'air.

Dans un tel dispositif, connu du document EP-A-0 243 326, l'injection de la vapeur dans la chambre d'aspiration permet d'aspirer par effet Venturi du lait et de l'air, et de chauffer le mélange formé. L'émulsion d'air et de lait se présente sous forme d'une mousse plus ou moins épaisse selon la configuration de la chambre d'émulsion qui est en aval de la chambre d'aspiration, mais surtout en fonction de la quantité d'air aspiré par rapport à la quantité de lait. On connaît également, d'après le document US-A-5 738 002, un dispositif de ce type dans lequel une vis de réglage est prévue pour ajuster le débit d'air aspiré. Du fait de la nature gazeuse de l'air, différente de celle du lait, le réglage du débit d'air nécessite de réaliser un passage de faible dimension et calibré de manière précise.

En obturant complètement le conduit d'air, ce type de dispositif permet également de préparer du lait chaud se présentant sous forme liquide, c'est-à-dire ne présentant quasiment pas de mousse, pour préparer un café au lait, aussi appelé latte par opposition au cappuccino dans lequel le lait se présente sous forme de mousse.

L'obturation du conduit d'air à l'aide d'une vis telle que décrite dans le document US-A-5 738 002, nécessite d'effectuer plusieurs tours jusqu'à obtenir le blocage de la vis, ce qui conduit à une perte du réglage adapté pour la préparation d'une mousse de lait, et par conséquent est peu pratique pour passer d'une position cappuccino à une position lait chaud.

La présente invention a pour but de réaliser un dispositif du type précité qui permet à l'utilisateur de passer aisément et rapidement d'une configuration du dispositif permettant de produire une mousse de lait à une configuration permettant de produire du lait chaud, et inversement, sans que le retour à une configuration de production d'une émulsion de lait nécessite un réglage fastidieux.

A cet effet, la présente invention a pour objet un dispositif de préparation d'émulsion de lait du type précité, caractérisé en ce qu'il comprend une portion tubulaire présentant une surface extérieure dans laquelle est agencé le débouché du conduit d'air, l'organe de commande comporte des premier et deuxième moyens d'étanchéité agencés sur la surface extérieure de la portion tubulaire, et ledit organe de commande d'air est mobile entre une position, dite cappuccino, pour laquelle le débouché du conduit d'air est en communication avec l'atmosphère et une position, dite lait chaud, pour laquelle les premier et deuxième moyens d'étanchéité définissent un espace étanche dans lequel est agencé le débouché du conduit d'air.

Grâce au premier et au deuxième moyens d'étanchéité de l'organe de commande d'air, un déplacement même relativement faible de cet organe de commande permet de passer aisément d'une configuration dans laquelle le conduit d'air est obturé de manière étanche, à une configuration dans laquelle il est en libre communication avec l'atmosphère ; le conduit d'air peut ainsi présenter une section calibrée en fonction du débit de lait obtenu dans des conditions normales d'utilisation, de sorte que l'on obtienne à la sortie du dispositif une mousse de lait de qualité satisfaisante. De plus, un tel organe de commande d'air peut être réalisé avec un nombre de pièces réduit sans modifier profondément ni la structure, ni l'encombrement du dispositif.

Dans des modes de réalisations préférés de l'invention, on a recours, en outre, à l'une et/ou à l'autre des dispositions suivantes :
- au moins le deuxième moyen d'étanchéité est solidaire de l'organe de commande d'air et déplacé avec celui-ci ;
- le débouché du conduit d'air comporte une rainure calibrée s'étendant de part et d'autre du deuxième moyen d'étanchéité lorsque l'organe de commande d'air est en position cappuccino, et comprise dans l'espace étanche lorsque l'organe de commande d'air est en position lait chaud ;
- la rainure calibrée présente une section croissante vers le conduit d'air, l'organe de commande d'air étant adapté à prendre au moins une première et une deuxième positions cappuccino pour lesquelles le deuxième moyen d'étanchéité est respectivement positionné au niveau d'une première et d'une deuxième section de la rainure, ladite deuxième section présentant une aire supérieure à la première section ;
- la surface extérieure de la portion tubulaire est cylindrique, et l'organe de commande d'air est une bague montée rotative autour de l'axe longitudinal de ladite portion tubulaire ;
- l'organe de commande d'air tourne au plus de 180° entre sa position cappuccino et sa position lait chaud ;
- le deuxième moyen d'étanchéité s'étend dans un plan incliné par rapport à l'axe longitudinal de la portion tubulaire, et l'organe de commande d'air est guidé en rotation par rapport à la portion tubulaire ;
- le deuxième moyen d'étanchéité s'étend dans un plan transversal à l'axe longitudinal de la portion tubulaire, et l'organe de commande d'air est guidé selon un mouvement hélicoïdal par rapport à la portion tubulaire ;
- au moins un des premier et deuxième moyens d'étanchéité est un bourrelet annulaire venu de matière avec l'organe de commande d'air.

Par ailleurs, l'invention à également pour objet une combinaison d'une machine à café du type expresso et d'un dispositif de production d'émulsion de lait tel que défini précédemment, la machine à café du type expresso comprenant un générateur de vapeur et un tube présentant une première extrémité reliée au générateur de vapeur et une deuxième extrémité formant une sortie de vapeur, caractérisée en ce que le dispositif de production d'émulsion de lait est agencé à la deuxième extrémité du tube de sortie de vapeur.

D'autres caractéristiques et avantages de l'invention apparaîtront au cours de la description qui va suivre, donnée à titre d'exemple non limitatif, en référence aux dessins annexés dans lesquels :
- la figure 1 est une vue en coupe d'un dispositif de production d'émulsion de lait selon un premier mode de réalisation de l'invention, dans laquelle un organe de commande d'air est en une position dite cappuccino ;
- la figure 2 est une vue analogue à la figure 1, dans laquelle l'organe de commande d'air est en une position dite lait chaud ;
- la figure 3 est une vue en perspective éclatée d'un deuxième mode de réalisation ;
- la figure 4 est une vue en coupe partielle selon la ligne IV-IV de la figure 3.

Sur les différentes figures, on a conservé des références identiques pour désigner des éléments identiques ou similaires.

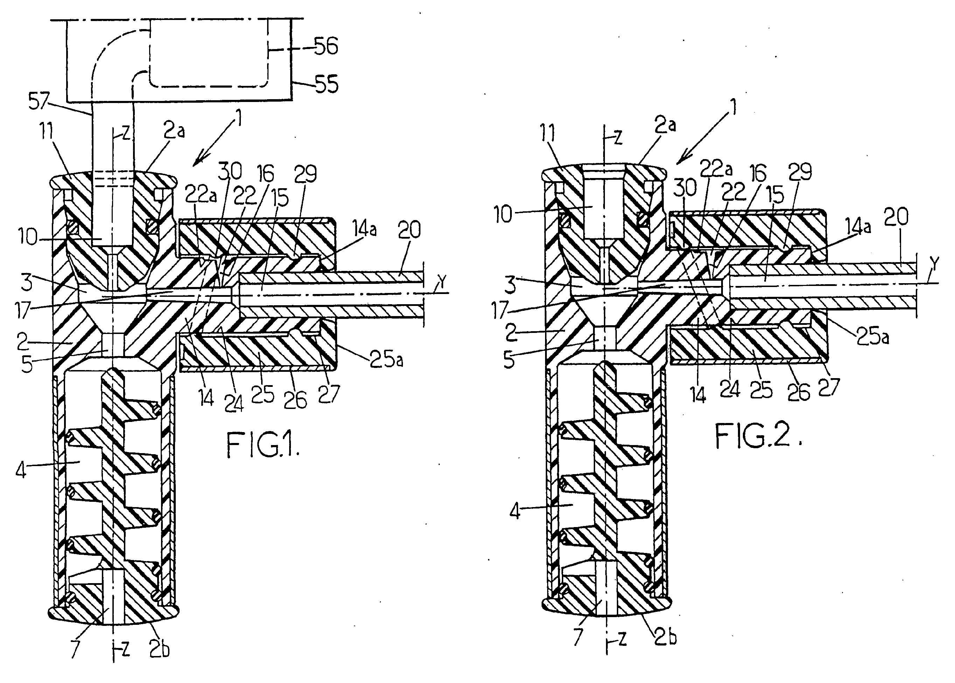

A la figure 1 est représenté un dispositif de production d'émulsion de lait 1 qui comporte un corps 2 s'étendant longitudinalement selon un axe central Z et globalement cylindrique. Le corps 2 comporte une chambre d'aspiration 3 et une chambre secondaire d'émulsion 4 coaxiales à l'axe central Z. La chambre d'aspiration 3 et la chambre d'émulsion 4 sont disposées consécutivement le long de l'axe central Z et communiquent entre elles par un passage 5.

Le dispositif 1 est destiné à être monté sur une machine à café de type expresso de manière à ce que la chambre d'aspiration 3 soit située au-dessus de la chambre d'émulsion 4, c'est-à-dire avec un axe central Z à peu près vertical pour favoriser l'écoulement de la chambre d'aspiration 3 vers la chambre d'émulsion 4.

Le corps 2 comprend un conduit d'injection de vapeur 10 s'étendant depuis une extrémité supérieure 2a du corps 2, jusqu'à la chambre d'aspiration 3. La portion supérieure du conduit d'injection de vapeur 10 présente un diamètre adapté pour insérer dans celle-ci l'extrémité d'un tube de sortie de vapeur de la machine expresso, et une portion inférieure débouchant dans la chambre d'aspiration 3, qui présente un diamètre réduit et permet d'injecter de la vapeur selon l'axe central Z. Le conduit d'injection de vapeur 10 est formé dans un bouchon 11 inséré de manière amovible et étanche dans le corps 2, afin notamment de faciliter le nettoyage de la chambre d'aspiration 3.

Le corps 2 comporte un bras tubulaire 14 s'étendant radialement par rapport à l'axe central Z et formé en une seule pièce avec le corps. Le bras 14 comporte un conduit de lait 15, un conduit d'air 16 et un conduit d'alimentation 17 s'étendant jusqu'à la chambre d'aspiration 3. On notera que le bras tubulaire 14 forme une portion tubulaire du dispositif 1, présentant un axe longitudinal Y et une surface extérieure 24 cylindrique dans les modes de réalisations représentés.

Le conduit de lait 15 s'étend radialement depuis l'extrémité 14a du bras 14 vers la chambre d'aspiration 3 jusqu'à un point où débouche le conduit d'air 16. Une première portion du conduit de lait 15 adjacente à l'extrémité 14a du bras, présente un diamètre intérieur adapté pour recevoir par emmanchement une extrémité d'un tube 20, l'autre extrémité (non représentée) de ce tube étant plongée dans un récipient contenant du lait.

Le conduit d'air 16 s'étend perpendiculairement par rapport au conduit de lait 15 depuis un débouché 22 agencé dans la face extérieure 24 du bras tubulaire 14, jusqu'au conduit de lait 15. Le conduit d'air 16 permet d'aspirer de l'air ambiant grâce à une mise en communication sélective, comme cela sera expliqué ci-après, du débouché 22 avec l'atmosphère. Le conduit d'air 16 présente une section décroissante vers le conduit de lait 15 de manière à limiter le débit d'air aspiré.

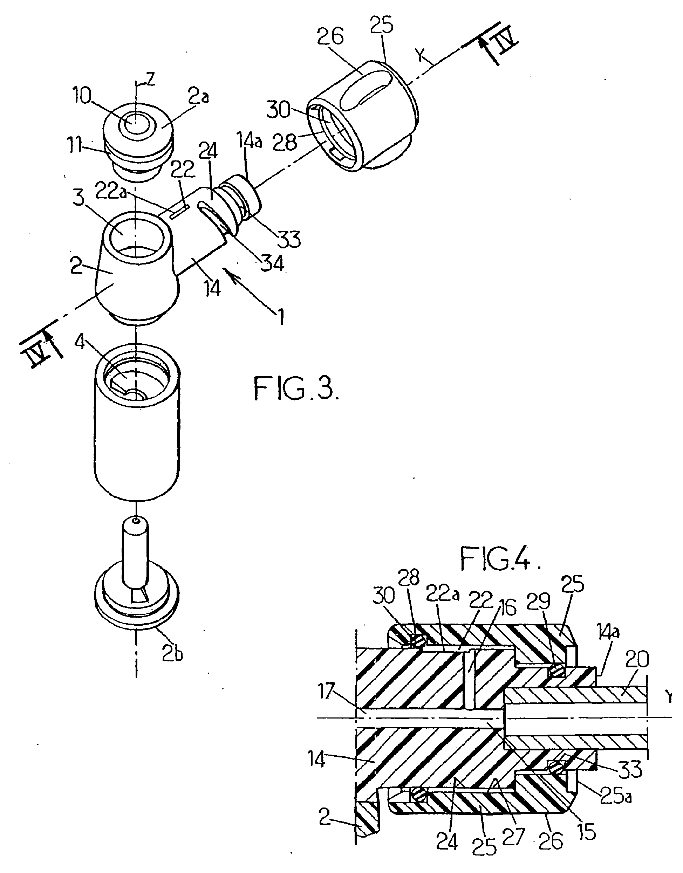

Dans les modes de réalisations représentés, le débouché 22 du conduit d'air 16, mieux visible à la figure 3, comprend une rainure 22a s'étendant selon l'axe longitudinal Y du bras tubulaire 14.

Le conduit d'alimentation 17 s'étend dans le prolongement du conduit de lait 15 à partir de l'intersection entre les conduits d'air 16 et de l'air 15, et met en communication ces conduits 15 et 16 avec la chambre d'aspiration 3 dans laquelle le lait et l'air sont aspirés simultanément par effet Venturi. Le conduit d'alimentation 17 débouche perpendiculairement au conduit d'injection de vapeur 10 de manière à favoriser l'aspiration du lait et de l'air, et le mélange avec la vapeur injectée.

Le mélange formé dans la chambre d'aspiration 3 est transféré par le passage 5 formé dans la partie inférieure de celle-ci vers la chambre secondaire d'émulsion 4, puis est évacué du dispositif 1 par un orifice de sortie 7 pratiqué à une extrémité inférieure 2b du corps 2.

Selon un premier mode de réalisation préféré et représenté aux figures 1 et 2, un organe de commande d'air 25 est monté rotatif autour de l'axe longitudinal Y sur le bras tubulaire 14. L'organe de commande d'air 25 présente une face extérieure 26 adaptée à être manipulée avec les doigts et une face intérieure 27 entourant la surface extérieure cylindrique 24 du bras 14.

Dans ce premier mode de réalisation, figures 1 et 2, la face intérieure 27 de l'organe de commande d'air 25 présente un premier bourrelet 29 et un deuxième bourrelet 30 qui sont circulaires et font saillie vers le centre du bras tubulaire 14. Ces premier et deuxième bourrelets (29, 30) forment respectivement un premier et un deuxième moyen d'étanchéité à l'air entre la surface extérieure 24 du bras 14 et la face intérieure 27 de l'organe de commande d'air 25. Dans ce premier mode de réalisation où les bourrelets (29, 30) sont venus de matière avec l'organe de commande d'air 25, il peut être préférable de réaliser celui-ci dans une matière plastique présentant une certaine élasticité afin que les bourrelets (29, 30) soient légèrement déformés au contact du bras tubulaire 14 et épousent ainsi de manière étanche la surface extérieure 24 de ce bras.

Le premier bourrelet 29 s'étend dans un plan transversal à l'axe longitudinal Y et présente une section radiale adaptée pour coopérer avec une rainure circulaire formée dans la face extérieure 24 du bras 14 et s'étendant dans le même plan transversal que le bourrelet 29. Ainsi, le premier bourrelet 29 remplit, outre sa fonction d'étanchéité, une fonction de guidage en rotation de l'organe de commande d'air 25 autour de l'axe longitudinal Y du bras 14. Dans cet exemple, l'organe de commande d'air 25 est donc mobile uniquement en rotation, à l'exclusion de toute possibilité de coulissement le long de l'axe longitudinal Y.

Le deuxième bourrelet 30 est formé de manière analogue au premier bourrelet 29, mais présente une hauteur inférieure de manière à venir presser de façon étanche la face extérieure 24 du bras 14 sans exercer une force de frottement excessive.

Par ailleurs, le deuxième bourrelet 30 s'étend dans un plan incliné par rapport à l'axe longitudinal Y du bras 14, et non pas dans un plan transversal comme le premier bourrelet 29. Cette disposition inclinée permet de déplacer longitudinalement le deuxième bourrelet 30 le long de la surface extérieure 24 du bras sous l'effet de la rotation de l'organe de commande d'air 25 autour de ce bras, et par conséquent, de faire varier la distance séparant les premier et deuxième bourrelets (29, 30) pour une direction radiale donnée du bras tubulaire 14. Par exemple, en effectuant une rotation de 180° de l'organe de commande d'air 25 depuis la position représentée à la figure 1 jusqu'à la position représentée à la figure 2, la distance entre le premier bourrelet 29 et le deuxième bourrelet 30 augmente lorsque l'on considère la direction radiale du bras tubulaire 14 qui comprend le conduit d'air 16.

En dehors des premier et deuxième bourrelets (29, 30), la surface extérieure 24 du bras tubulaire 14 est séparée de la face intérieure 27 de l'organe de commande d'air 25 par un espace dans lequel l'air peut circuler. Ainsi, l'espace entre le bras tubulaire 14 et l'organe de commande d'air 25 qui s'étend depuis le deuxième bourrelet 30 vers le corps cylindrique 2, c'est-à-dire s'étendant à gauche du deuxième bourrelet 30 sur les figures 1 et 2, est en libre communication avec l'air ambiant. L'espace compris entre le bras tubulaire 14 et l'organe de commande d'air 25, qui s'étend depuis le premier bourrelet 29 vers l'extrémité libre 14a du bras, pourrait également être en libre communication avec l'air ambiant. Toutefois, dans le premier mode de réalisation, l'organe de commande d'air 25 comporte un rebord radialement interne 25a qui vient épouser l'extrémité 14a du bras tubulaire et augmente l'étanchéité à l'air.

Le débouché 22 du conduit d'air 16 est agencé longitudinalement dans la surface extérieure 24 du bras 14 à une position adaptée pour que le débouché 22 soit au moins en partie en communication avec l'air ambiant lorsque l'organe de commande d'air 25 est dans une première position, dite cappuccino, représentée à la figure 1, et pour que le débouché 22 soit compris dans l'espace étanche délimité par les premier et deuxième bourrelets (29, 30), la surface extérieure 24 du bras tubulaire 14 et la face intérieure 27 de l'organe de commande d'air 25, lorsque ledit organe de commande d'air est dans une deuxième position, dite lait chaud, représentée à la figure 2.

Dans la position représentée à la figure 1, le deuxième bourrelet 30 est agencé en regard de la rainure 22a du débouché 22, c'est-à-dire en regard d'une zone de faible profondeur, et forme avec cette rainure 22a un passage d'air de section réduite, sensiblement égale à la section de la rainure 22a au niveau du deuxième bourrelet 30, qui permet de calibrer le débit d'air aspiré.

Toutefois, le débouché 22 du conduit d'air 16 pourrait être formé par un simple trou circulaire agencé de manière à ce que les premier et deuxième bourrelets (29, 30) soient situés de part et d'autre du débouché 22 lorsque l'organe de commande d'air est en position lait chaud, et de manière à ce que les premier et deuxième bourrelets (29, 30) soient situés tous deux d'un même côté du débouché 22, sans recouvrir partiellement ce débouché, lorsque l'organe de commande d'air 25 est en position cappuccino. Mais le fait de prévoir une rainure 22a présente des avantages, notamment lors de la fabrication. En effet, lorsqu'il s'agit de pièces plastiques moulées par injection, il est plus aisé de réaliser un passage calibré à l'aide d'un relief du moule de faible hauteur qui forme une rainure, qu'à l'aide d'un relief ou d'un insert se présentant sous la forme d'une aiguille fine.

De plus, dans une variante non représentée, il peut être avantageux de prévoir que la rainure 22a présente une section croissante depuis son extrémité distante du conduit d'air 16 jusqu'à son extrémité adjacente au conduit d'air 16, par exemple, en augmentant progressivement la profondeur et/ou la largeur de la rainure 22a. L'organe de commande d'air 25 est alors adapté à prendre plusieurs positions, au moins deux, pour lesquelles le deuxième bourrelet 30 est positionné longitudinalement au niveau de différentes sections de la rainure 22a qui présentent chacune une aire différente. On obtient ainsi différentes positions cappuccino correspondant chacune à un débit d'air différent, ce qui permet d'obtenir différentes quantités de mousse. Ces différentes positions cappuccino, tout comme la position lait chaud ou une position cappuccino unique, peuvent être repérées par des pictogrammes inscrits sur la face extérieure 26 de l'organe de commande d'air 25, que l'utilisateur peut aisément amener en correspondance avec un repère formé sur le corps cylindrique 2.

Dans le deuxième mode de réalisation représenté aux figures 3 et 4, le dispositif de production d'émulsion 1 comprend de manière analogue au premier mode de réalisation un bras tubulaire 14 dans lequel sont formés les conduits de lait 15, d'air 16 et d'alimentation 17, et un organe de commande d'air 25 mobile se présentant également sous la forme d'une bague qui entoure la surface extérieure cylindrique 24 du bras 14.

Dans ce deuxième mode de réalisation, les premier et deuxième moyens d'étanchéité sont formés par des joints toriques (29, 30) disposés dans un plan transversal à l'axe longitudinal Y du bras tubulaire 14, qui assurent une étanchéité entre la surface extérieure 24 du bras 14 et la face intérieure 27 de l'organe de commande d'air 25.

Le premier joint d'étanchéité 29 est logé dans une gorge annulaire 33 formée dans la surface extérieure 24 du bras tubulaire 14 et à proximité de l'extrémité 14a de celui-ci. Le premier moyen d'étanchéité formé par le joint torique 29 est donc immobile par rapport au bras 14.

Le deuxième moyen d'étanchéité formé par le deuxième joint torique 30 est logé dans une gorge annulaire 28 formée dans la face intérieure de l'organe de commande d'air 25. Le deuxième moyen d'étanchéité formé par le joint torique 30 est donc rendu solidaire de l'organe de commande d'air 25.

Le bras tubulaire 14 comporte en outre une rainure 34, visible à la figure 3, qui s'étend hélicoïdalement dans la surface extérieure 24 sur un secteur angulaire d'environ 120°. L'organe de commande d'air 25 comporte un pion, non visible aux figures 3 et 4, s'étendant radialement depuis la face intérieure 27 vers l'axe longitudinal Y. Lorsque la bague 25 formant l'organe de commande d'air est montée sur le bras tubulaire 14, le pion coopère avec la rainure 34, de sorte qu'une rotation de l'organe de commande d'air effectuée par l'utilisateur entraîne un mouvement combiné de translation de cet organe de commande 25 le long du bras tubulaire 14. Ce guidage hélicoïdal entre l'organe de commande d'air 25 et le bras tubulaire 14, entraîne donc un déplacement du deuxième joint torique 30 le long de la surface extérieure 24 entre deux positions extrêmes définies par l'amplitude du mouvement combiné de rotation et de translation qu'autorise la rainure hélicoïdale 34.

La configuration représentée à la figure 4 correspond à la position lait chaud de l'organe de commande d'air 25 dans laquelle celui-ci est situé au plus près du corps 2. Le débouché 22 du conduit d'air 16 qui comprend une rainure 22a, analogue à celle du premier mode de réalisation, est agencé dans la surface extérieure 24 du bras 14 de manière à être situé entre les premier et deuxième joints toriques (29, 30) pour cette position lait chaud, c'est-à-dire dans une configuration où le conduit d'air 16 débouche dans un espace étanche.

Par ailleurs, la rainure hélicoïdale 34 est adaptée à positionner le deuxième joint torique 30 en regard de la rainure 22a lorsque l'on effectue une rotation d'environ 120° en sens anti-horaire de l'organe de commande d'air 25 depuis sa position lait chaud représentée à la figure 4, à une position cappuccino, non représentée, dans laquelle le conduit d'air 16 peut aspirer de l'air ambiant à travers le passage calibré formé par la rainure 22a et le deuxième joint torique 30. Tout comme dans le premier mode de réalisation, les positions lait chaud et la ou les positions cappuccino peuvent être aisément repérées à l'aide de pictogrammes formés sur la face extérieure 26 de l'organe de commande d'air 25.

Le dispositif d'émulsion de lait 1 est monté sur une machine à café de type expresso 55, partiellement représentée à la figure 1, qui comprend un générateur de vapeur 56 et un tube 57 relié au générateur de vapeur. Le tube 57 présente une extrémité formant une sortie de vapeur sur laquelle est monté le dispositif d'émulsion de lait 1. Ce montage peut être permanent ou amovible et, dans ce dernier cas, le dispositif 1 forme un accessoire de la machine à café.

Pour utiliser le dispositif, l'utilisateur place l'organe de commande d'air 25 dans la position approprié et actionne une commande de production de vapeur de la machine à café 55 permettant de faire sortir de la vapeur sous pression, étant entendu que le conduit d'injection de vapeur 10 du dispositif 1 est monté sur le tube 57 de sortie de vapeur de la machine et que le conduit d'aspiration de lait 15 est relié à une réserve de lait, par exemple par l'intermédiaire du tube souple 20 plongeant dans un récipient.

La position appropriée de l'organe de commande d'air 25, c'est-à-dire une position lait chaud ou une position cappuccino, éventuellement choisie parmi différentes positions cappuccino, se fait aisément par rotation de l'organe de commande d'air 25 sur moins d'un demi-tour en positionnant un pictogramme approprié en regard d'un repère associé. Le mouvement imprimé à l'organe de commande d'air 25, que ce soit une rotation pure comme dans le premier mode de réalisation, ou un mouvement hélicoïdal comme dans le deuxième mode de réalisation, permet de déplacer le deuxième moyen d'étanchéité 30 de manière à ce que le conduit d'air 16 soit en communication avec l'atmosphère pour la position cappuccino, ou de manière à ce que le conduit d'air 16 débouche dans un espace étanche par rapport à l'atmosphère pour la position lait chaud.

En position cappuccino, la dépression créée dans la chambre d'aspiration 3 par l'injection de la vapeur entraîne une aspiration à la fois de lait et d'air par les conduits 15 et 16, un pré-mélange de l'air et du lait dans le conduit d'alimentation 17, une aspiration et un premier mélange du lait, de l'air et de la vapeur dans la chambre d'aspiration 3, suivis d'une émulsion dans la chambre secondaire 4 et d'un écoulement vers la sortie 7 du dispositif où l'on obtient une mousse de bonne qualité du fait du calibrage du débit d'air.

En position lait chaud, le conduit d'air 16 est obturé, de sorte qu'uniquement du lait est aspiré dans la chambre d'aspiration 3. Ce lait est réchauffé par contact avec la vapeur injectée dans la chambre d'aspiration 3, puis lors du passage dans la chambre secondaire 4 où la majeure partie de la vapeur se condense, de sorte que le lait chaud s'écoulant à travers la sortie 7 ne comporte pratiquement pas de mousse.

Les modes de réalisation décrits ci-dessus ne sont pas limitatifs. Il est notamment possible de prévoir que les deux moyens d'étanchéité soient immobiles par rapport au bras tubulaire 14. Il est également possible que la mise en communication avec l'air ambiant du débouché 22 du conduit d'air 16 soit réalisée par une rainure formée dans la face interne 27 de l'organe de commande d'air 25 qui est sélectivement positionnée de part et d'autre du deuxième moyen d'étanchéité 30, ou de manière à être en dehors de l'espace compris entre les moyens d'étanchéité (29, 30), grâce au mouvement de l'organe de commande d'air 25. Par ailleurs, les moyens d'étanchéité (29, 30) pourraient être réalisés différemment, par exemple par contact direct d'une portion cylindrique ou rainurée de la face interne 27 de l'organe de commande d'air 25 avec une portion complémentaire de la surface extérieure 24 du bras tubulaire 14.

## Revendications

1. Dispositif de production d'émulsion de lait comprenant un corps (2) comportant :
- un conduit d'injection de vapeur (10) débouchant dans une chambre d'aspiration (3) et destiné à être connecté à une source de vapeur ;
- un conduit de lait (15) en communication avec la chambre d'aspiration (3) et destiné à être relié à un récipient contenant du lait ;
- un conduit d'air (16) en communication avec ladite chambre d'aspiration (3) et présentant un débouché (22) par lequel est destiné à être aspiré de l'air ambiant ;
- une chambre d'émulsion (4) présentant une sortie (7) par laquelle l'émulsion formée est évacuée ; et
- un organe de commande d'air (25) adapté à régler le débit d'air circulant dans le conduit d'air (16),
**caractérisé en ce qu'**il comprend une portion tubulaire (14) présentant une surface extérieure (24) dans laquelle est agencé le débouché (22) du conduit d'air (16), l'organe de commande d'air (25) comporte des premier (29) et deuxième (30) moyens d'étanchéité agencés sur la surface extérieure (24) de la portion tubulaire (14), et ledit organe de commande d'air (25) est mobile entre une position, dite cappuccino, pour laquelle le débouché (22) du conduit d'air (16) est en communication avec l'atmosphère et une position, dite lait chaud, pour laquelle les premier (29) et deuxième (30) moyens d'étanchéité définissent un espace étanche dans lequel est agencé le débouché (22) du conduit d'air (16).

2. Dispositif selon la revendication 1, dans lequel au moins le deuxième moyen d'étanchéité (30) est solidaire de l'organe de commande d'air (25) et déplacé avec celui-ci.

3. Dispositif selon la revendication 2, dans lequel le débouché (22) du conduit d'air (16) comporte une rainure calibrée (22a) s'étendant de part et d'autre du deuxième moyen d'étanchéité (30) lorsque l'organe de commande d'air (25) est en position cappuccino, et comprise dans l'espace étanche lorsque l'organe de commande d'air (25) est en position lait chaud.

4. Dispositif selon la revendication 3, dans lequel la rainure calibrée (22a) présente une section croissante vers le conduit d'air (16), l'organe de commande d'air (25) étant adapté à prendre au moins une première et une deuxième positions cappuccino pour lesquelles le deuxième moyen d'étanchéité (30) est respectivement positionné au niveau d'une première et d'une deuxième section de la rainure (22a), ladite deuxième section présentant une aire supérieure à la première section.

5. Dispositif selon l'une quelconque des revendications précédentes, dans lequel la surface extérieure (24) de la portion tubulaire (14) est cylindrique, et l'organe de commande d'air (25) est une bague montée rotative autour de l'axe longitudinal (Y) de ladite portion tubulaire.

6. Dispositif selon la revendication 5, dans lequel l'organe de commande d'air (25) tourne au plus de 180° entre sa position cappuccino et sa position lait chaud.

7. Dispositif selon la revendication 5 ou 6, dans lequel le deuxième moyen d'étanchéité (30) s'étend dans un plan incliné par rapport à l'axe longitudinal (Y) de la portion tubulaire (14), et dans lequel l'organe de commande d'air (25) est guidé en rotation par rapport à la portion tubulaire (14).

8. Dispositif selon la revendication 5 ou 6, dans lequel le deuxième moyen d'étanchéité (30) s'étend dans un plan transversal à l'axe longitudinal (Y) de la portion tubulaire (14), et dans lequel l'organe de commande d'air (25) est guidé selon un mouvement hélicoïdal par rapport à la portion tubulaire (14).

9. Dispositif selon l'une quelconque des revendications précédentes, dans lequel au moins un des premier (29) et deuxième (30) moyens d'étanchéité est un bourrelet annulaire venu de matière avec l'organe de commande d'air (25).

10. Combinaison d'une machine à café du type expresso (55) et d'un dispositif de production d'émulsion de lait (1) selon l'une quelconque des revendications précédentes, la machine à café du type expresso (55) comprenant un générateur de vapeur (56) et un tube (57) présentant une première extrémité reliée au générateur de vapeur (56) et une deuxième extrémité formant une sortie de vapeur, **caractérisée en ce que** le dispositif de production d'émulsion de lait (1) est agencé à la deuxième extrémité du tube (57) de sortie de vapeur.

## Claims

1. Device for producing a milk emulsion, comprising a body (2) having:
- a steam injection conduit (10) emerging in a suction chamber (3) and intended to be connected to a source of steam;
- a milk conduit (15) in communication with the suction chamber (3) and intended to be connected to a receptacle containing milk;
- an air conduit (16) in communication with the said suction chamber (3) and having an outlet (22) through which ambient air is intended to be sucked;
- an emulsion chamber (4) having an outlet (7) through which the formed emulsion is discharged; and
- an air control member (25) adapted to adjust the flow of air flowing in the air conduit (16),
**characterised in that** it comprises a tubular portion (14) having an external surface (24) in which the outlet (22) of the air conduit (16) is arranged, the air control member (25) comprises first (29) and second (30) sealing means arranged on the external surface (24) of the tubular portion (14), and the said air control member (25) is able to move between a so-called cappuccino position in which the outlet (22) of the air conduit (16) is in communication with the atmosphere and a so-called hot-milk position in which the first (29) and second (30) sealing means define a sealed space in which the outlet (22) of the air conduit (16) is arranged.

2. Device according to claim 1, in which at least the second sealing means (30) is secured to the air control member (25) and moved with it.

3. Device according to claim 2, in which the outlet (22) of the air conduit (16) has a calibrated groove (22A) extending on each side of the second sealing means (30) when the air control member (25) is in the cappuccino position, and included in the sealed space when the air control member (25) is in the hot-milk position.

4. Device according to claim 3, in which the calibrated groove (22a) has a cross section increasing towards the air conduit (16), the air control member (25) being adapted to adopt at least first and second cappuccino positions in which the second sealing means (30) is respectively positioned at a first and second cross section of the groove (22a), the said second cross section having an area greater than the first cross section.

5. Device according to any one of the preceding claims, in which the external surface (24) of the tubular portion (14) is cylindrical, and the air control member (25) is a ring mounted so as to rotate about the longitudinal axis (Y) of the said tubular portion.

6. Device according to claim 5, in which the air control member (25) turns at most through 180° between its cappuccino position and its hot milk position.

7. Device according to claim 5 or 6, in which the second sealing means (30) extends in an inclined plane with respect to the longitudinal axis (Y) of the tubular portion (14) and in which the air control member (25) is guided in rotation with respect to the tubular portion (14).

8. Device according to claim 5 or 6, in which the second sealing means (30) extends in a plane transverse to the longitudinal axis (Y) of the tubular portion (14) and in which the air control member (25) is guided in a helical movement with respect to the tubular portion (14).

9. Device according to any one of the preceding claims, in which at least one of the first (29) and second (30) sealing means is an annular rim made in one piece with the air control member (25).

10. Combination of a coffee machine of the espresso type (55) and a milk emulsion production device (1) according to any one of the preceding claims, the coffee machine of the espresso type (55) comprising a steam generator (56) and a tube (57) having a first end connected to the steam generator (56) and a second end forming a steam outlet, **characterised in that** the milk emulsion production device (1) is arranged at the second end of the steam outlet tube (57).

## Patentansprüche

1. Vorrichtung zum Herstellen einer Milchemulsion, mit einem Körper (2), welcher umfasst:
- eine Dampfeinspritzleitung (10), die in einer Ansaugkammer (3) endet und zur Verbindung mit einer Dampfquelle bestimmt ist;
- eine Milchleitung (15) in Verbindung mit der Ansaugkammer (3), die zur Verbindung mit einem die Milch enthaltenden Gefäß bestimmt ist,
- eine Luftleitung (16) in Verbindung mit der Ansaugkammer (3), welche eine Mündung (22) aufweist, die zum Ansaugen von Umgebungsluft bestimmt ist;
- eine Emulsionskammer (4), die einen Ausgang (7) aufweist, über den die gebildete Emulsion abgegeben wird; und
- ein Luftsteuerelement (25), das zum Regeln des in der Luftleitung (16) strömenden Luftdurchsatzes geeignet ist;
**gekennzeichnet durch** einen Rohrabschnitt (14) mit einer Außenfläche (24), an der die Mündung (22) der Luftleitung (16) angeordnet ist, wobei das Luftsteuerelement (25) erste (29) und zweite (30) Dichtungsmittel aufweist, welcher an der Außenfläche (24) des Rohrabschnitts (14) angeordnet sind, und wobei das Luftsteuerelement (25) zwischen einer als "Cappuccino" bezeichneten Position, in der die Mündung (22) der Luftleitung (16) in Verbindung mit der Umgebung ist, und einer als "heiße Milch" bezeichneten Position, in der die ersten (29) und zweiten (30) Dichtungsmittel einen dichten Raum eingrenzen, in dem die Mündung (22) der Luftleitung (16) angeordnet ist, bewegbar ist.

2. Vorrichtung nach Anspruch 1, wobei wenigstens das zweite Dichtungsmittel (30) mit dem Luftsteuerelement (25) einteilig und mit diesem verlagerbar ist.

3. Vorrichtung nach Anspruch 2, wobei die Mündung (22) der Luftleitung (16) eine kalibrierte Nut (22a) aufweist, welche sich beidseits des zweiten Dichtungsmittels (30) erstreckt, wenn das Luftsteuerelement (25) in der "Cappuccino"-Position ist, und die in dem dichten Raum enthalten ist, wenn das Luftsteuerelement (25) in der "heiße Milch"-Position ist.

4. Vorrichtung nach Anspruch 3, wobei die kalibrierte Nut (22a) einen in Richtung der Luftleitung (16) zunehmenden Querschnitt aufweist, wobei das Luftsteuerelement (25) dazu eingerichtet ist, wenigstens eine erste und eine zweite "Cappuccino"-Position einzunehmen, in denen das zweite Dichtungsmittel (30) jeweils auf Höhe eines ersten und eines zweiten Abschnitts der Nut (22a) positioniert ist, wobei der zweite Abschnitt eine größere Fläche aufweist als der erste Abschnitt.

5. Vorrichtung nach einem der vorangehenden Ansprüche, wobei die Außenfläche (24) des Rohrabschnitts (16) zylindrisch ist und das Luftsteuerelement (25) eine Hülse ist, die drehbar um die Längsachse (Y) dieses Rohrabschnitts montiert ist.

6. Vorrichtung nach Anspruch 5, wobei das Luftsteuerelement (25) zwischen seiner "Cappuccino"-Position und seiner "heiße Milch"-Position um mehr als 180° dreht.

7. Vorrichtung nach Anspruch 5 oder 6, wobei das zweite Dichtungsmittel (30) sich in einer relativ zur Längsachse (Y) des Rohrabschnitts (14) geneigten Ebene erstreckt und wobei das Luftsteuerelement (25) relativ zu dem Rohrabschnitt (14) drehbar geführt ist.

8. Vorrichtung nach Anspruch 5 oder 6, wobei das zweite Dichtungsmittel (30) sich in einer zur Längsachse (Y) des Rohrabschnitts (14) quer verlaufenden Ebene erstreckt und wobei das Luftsteuerelement (25) relativ zu dem Rohrabschnitt (14) gemäß einer schraubenförmigen Bewegung geführt ist.

9. Vorrichtung nach einem der vorangehenden Ansprüche, wobei wenigstens das erste (29) oder das zweite (30) Dichtungsmittel ein ringförmiger Wulst ist, der aus dem Material des Luftsteuerelements (25) gebildet ist.

10. Kombination einer Espresso-Maschine (55) und einer Vorrichtung zum Herstellen von Milchemulsion (1) gemäß einem der vorangehenden Ansprüche, wobei die Espresso-Maschine (55) einen Dampferzeuger (56) und ein Rohr (57) mit einem ersten mit dem Dampferzeuger (56) verbundenen Ende und einem zweiten einen Dampfausgang bildenden Ende aufweist, **dadurch gekennzeichnet, dass** die Vorrichtung zum Herstellen von Milchemulsion (1) an dem zweiten einen Dampfausgang bildenden Ende des Rohres (57) angeordnet ist.
